# EUROPÄISCHE PATENTSCHRIFT

(11) **EP 0 597 344 B1**
(45) Veröffentlichungstag und Bekanntmachung des Hinweises auf die Patenterteilung: **27.12.1995**
(21) Anmeldenummer: 93117643.2
(22) Anmeldetag: 30.10.1993
(51) Int. Cl.: B05B 1/18, B05B 15/02, B05B 1/30, B29C 45/14

(54) **Brausekopf**
Showerhead
Tête de douche

(30) Priorität: 04.11.1992 DE 4237203; 18.03.1993 DE 4308599
(43) Veröffentlichungstag der Anmeldung: 18.05.1994
(73) Patentinhaber: FRIEDRICH GROHE AKTIENGESELLSCHAFT, D-58675 Hemer (DE)
(72) Erfinder: Körfgen, Harald, D-58730 Fröndenberg (DE); Heimann, Bruno, D-58730 Fröndenberg (DE); Jensen, Hans-Jürgen, D-59514 Welver (DE); Bechte, Veit, D-59439 Holzwickede (DE)

(56) Entgegenhaltungen:
- EP-A- 0 443 538
- DE-A- 3 733 287
- DE-A- 3 943 062

## Beschreibung

Die Erfindung betrifft einen Brausekopf mit einem an die Wasserzufuhr anschließbaren, wenigstens eine Wasserkammer bildenden Gehäuse und einem Bodenteil, an dem elastische, schlauchartige Wasserstrahldüsen einstückig ausgebildet sind.

Ein derartiger Brausekopf, bei dem zur Entfernung von Kalkverkrustungen der Endbereich der Wasserstrahldüsen elastisch von Hand verformbar ist, ist aus der DE 39 43 062 A1 bekannt. Hierbei ist das gesamte Bodenteil aus einem Elastomer hergestellt, so daß es erforderlich ist, wenn Verformungen des gesamten Bodenteils durch den anstehenden Wasserdruck vermieden werden sollen, das Bodenteil relativ dickwandig auszubilden.
Außerdem ist in dieser Druckschrift alternativ ein mehrteiliges Bodenteil vorgeschlagen, wobei dann die Wasserstrahldüsen in einer starren Bodenplatte eingelegt oder eingeknöpft werden. Die Zusammenmontage der Einzelteile ist jedoch verhältnismäßig aufwendig. Auch kann hierbei nicht völlig ausgeschlossen werden, daß bei der Reinigung der vorstehenden Endbereiche der Wasserstrahldüsen, diese in ihrer Position zur Bodenplatte verändert werden, so daß hieraus in unerwünschter Weise eine Änderung der Strahlrichtung und/oder gar eine Undichtigkeit zwischen der Bodenplatte und den Wasserstrahldüsen nicht völlig ausgeschlossen werden kann.

Der Erfindung liegt die Aufgabe zugrunde, einen verbesserten gattungsgemäßen Brausekopf zu schaffen, bei dem eine dickwandige Ausbildung des Bodenteils nicht erforderlich ist, andererseits aber die schlauchartigen Wasseraustrittsöffnungen die erforderliche Elastizität beibehalten können, sowie ein Verfahren zur Herstellung des Bodenteils vorzuschlagen.

Diese Aufgabe wird erfindungsgemäß mit den Merkmalen des Anspruchs 1 bzw. des Anspruchs 13 gelöst.
Weitere Ausgestaltungen der Erfindung sind in den Ansprüchen 2 bis 12 und 14 angegeben.

Ausführungsbeispiele der Erfindung sind in der Zeichnung dargestellt und werden im folgenden beschrieben.
Es zeigt
- Figur 1: ein Bodenteil für einen Brausekopf im Schnitt;
- Figur 1a: einen Ausschnitt des Bodenteils gemäß Figur 1 in vergrößerter Darstellung;
- Figur 1b: ein Teil des Bodenteils gemäß Figur 1 in Draufsicht in vergrößerter Darstellung;
- Figur 2: die in Figur 1 gezeigte Trägerplatte im Schnitt.
- Figur 3: einen anderen Brausekopf mit Durchflußbegrenzer teilweise geschnitten;
- Figur 4: einen Teil des Brausekopfs gemäß Figur 3 in vergrößerter Darstellung in Normalbetriebsstellung;
- Figur 5: einen Teil des Brausekopfes gemäß Figur 3 in vergrößerter Darstellung in der Betriebsstellung bei einem erhöhten Wasserzuflußdruck.

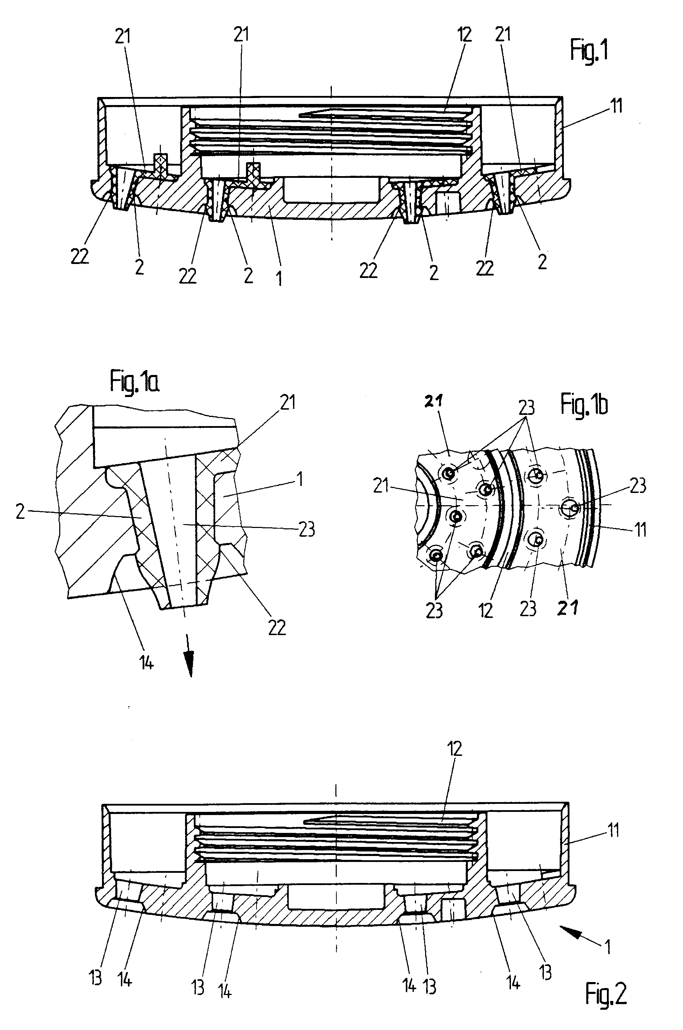

Das in der Zeichnung Figur 1 bis 1b dargestellte Bodenteil ist für den Einsatz in einem Brausekopfgehäuse vorgesehen, wie es in der Patentanmeldung DE 41 16 932 A1 gezeigt ist. Das Bodenteil ist aus einem Kunststoffverbundmaterial hergestellt, wobei eine leicht gewölbte Trägerplatte 1 aus Polybutylenterephthalat (PBT) vorgesehen ist, an der an der stromaufwärts gelegenen Stirnwand eine etwa zylinderförmige Schürze 11 angeformt ist, an der ein in der Zeichnung nicht dargestellter Dichtring des Brausekopfgehäuses anliegt. Koaxial zur Schürze 11 ist an der Trägerplatte 1 an einem Rohransatz ein Gewinde 12 zur Befestigung am Gehäuse des in der Zeichnung ebenfalls nicht dargestellten Brausekopfes vorgesehen.
In Durchtrittsöffnungen 13 sind Wasserstrahldüsen 2 aus Silikon zusammen mit an der stromaufwärts gelegenen Stirnseite der Trägerplatte 1 angeordneten, kreisringförmigen Scheiben 21 eingeformt. An der stromabwärts gelegenen Seite sind die Durchtrittsöffnungen 13 jeweils mit einer Aussenkung 14 versehen, in die jeweils eine Wasserstrahldüse 2 mit einem außen umlaufenden Ringbund 22 eingreift, so daß in axialer Richtung jede Wasserstrahldüse 2 zusätzlich noch formschlüssig im Bereich der Durchtrittsöffnung 13 gehalten ist.
Die Wasserstrahldüsen 2 haben, wie es insbesondere aus Figur 1a zu entnehmen ist, jeweils einen in Strömungsrichtung konisch verjüngt ausgebildeten Düsenkanal 23. Hierbei ist der Außenmantel, beginnend am Ringbund 22, stärker konisch verjüngt ausgebildet, so daß im Endbereich die Wandstärke der Wasserstrahldüse 2 zunehmend verringert ist und störende Verkrustungen leicht durch ein Walken oder Abstreichen mit der Hand entfernbar sind.

Das aus Kunststoffverbundmaterial bestehende Bodenteil kann in folgender Weise hergestellt werden:
Zunächst wird die Trägerplatte 1 aus Polybutylenterephthalat (PBT) im Spritzgießverfahren hergestellt. Das Kunststoffmaterial kann hierbei mit einem Verstärkungsstoff, beispielsweise Glasfasern, gefüllt sein, so daß einerseits eine höhere Festigkeit erzielbar ist und andererseits eine noch festere Verbindung mit dem Kunststoffverbundmaterial Silikon erreicht werden kann. Danach wird die Trägerplatte 1 in ein zweites Spritzgießwerkzeug eingebracht und hier die Wasserstrahldüsen 2 aus Silikon mit den kreisringförmigen Scheiben 21 angespritzt. Hierbei findet eine Verbindung zwischen dem Silikon und dem PBT statt, so daß die Wasserstrahldüsen mit der Trägerplatte 1 unlösbar verbunden sind.

Alternativ kann auch als Kunststoffverbundmaterial die Materialpaarung Polypropylen (PP) und Thermoplastelastomer (TPE) eingesetzt werden. Auch in diesem Fall ist zunächst die Trägerplatte 1 aus Polypropylen mit den Durchtrittsöffnungen 13 herzustellen. Danach können, entsprechend dem vorstehend aufgeführten Ausführungsbeispiel, die Wasserstrahldüsen 2 mit den ringförmigen Scheiben 21 aus Thermoplastelastomer angespritzt werden.

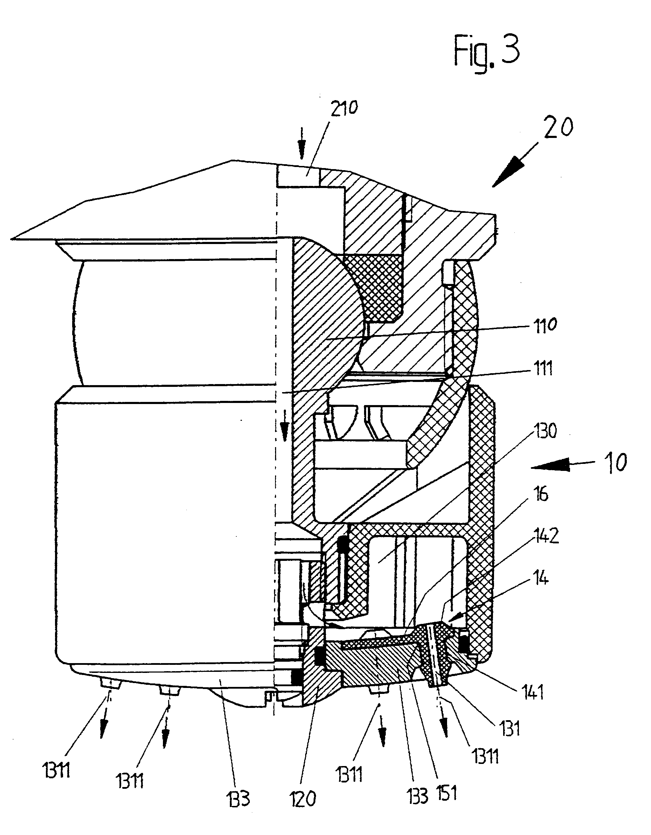

Ein weiteres Ausführungsbeispiel ist in den Figuren 3 bis 5 dargestellt, wobei den einzelnen Wasseraustrittsöffnungen 131 Durchflußbegrenzer zur Beschränkung der maximalen Wasseraustrittsmenge pro Zeiteinheit zugeschaltet sind. Der in Figur 3 zum Teil gezeigte Brausekopf besteht aus einem Halter 20 und einem Brausekopf 10. Der Halter 20 kann an einer Gebäudewand befestigt werden und ist mit einem Wassereinlaß 210 versehen. Der Brausekopf 10 ist mit einem Kugelkopfrohr 110 in einer Kugelpfanne des Halters 20 verschwenkbar angeordnet, wobei das zufließende Wasser durch einen zentralen Kanal 111 über eine Rohrschraube 120 vom Wassereinlaß 210 entsprechend den Pfeilen in eine Ringkammer 130 oberhalb eines Brausebodens 133 in den Brausekopf 10 einströmen kann.
Im Brauseboden 13 sind symmetrisch Wasseraustrittsöffnungen 131 angeordnet, wobei die Wasseraustrittsöffnungen 131 als zylindrische Bohrungen auf einer Mittelachse 1311 ausgebildet sind. Die Wasseraustrittsöffnungen 131 sind hierbei ebenfalls in Rohren 141 aus gummielastischem Material angeordnet, welches jeweils von einer Bohrung 15 im Brauseboden 133 aufgenommen ist, wobei an der stromaufwärts gelegenen Stirnseite des Brausebodens 133 die einzelnen Rohre 141 einstückig mit einer gummielastischen Scheibe 16 ausgebildet sind. Zur zusätzlichen Sicherung im Brauseboden 133 weisen die Rohre 141 am stromabwärts gelegenen Bereich jeweils einen Bund 1411 auf, der in der Stecklage von einer Aussenkung 132 des Brausebodens 133 aufgenommen ist. Jedes Rohr 141 weist einen ringförmigen Wulst 14' am stromaufwärts gelegenen Bereich der Wasseraustrittsöffnung 131 auf, wobei einerseits der Wulst 14' von einer etwa konischen Aussenkung 151 aufgenommen ist und andererseits auf dem Wulst 14' ein etwa kegelstumpfförmiger Ansatz 142 ausgebildet ist, so daß sich der Einströmbereich der Wasseraustrittsöffnung 131 etwas vom Brauseboden 133 und der Scheibe 16 abhebt.
Die Scheibe 16 mit den Wülsten 14' und den Rohren 141 sind aus einem gummielastischen Material, vorzugsweise Silikongummi mit einer Materialhärte von etwa 60 Shore, hergestellt. Die Scheibe 16 mit den Wülsten 14' und den Rohren 141 ist wieder im Spritzgießverfahren in den entsprechend vorbereiteten Brauseboden 133 eingebracht.
Alternativ können die Rohre 141 mit den Wülsten 14' auch einzeln, d.h. ohne Scheibe 16, an den Brauseboden 133 angespritzt werden.

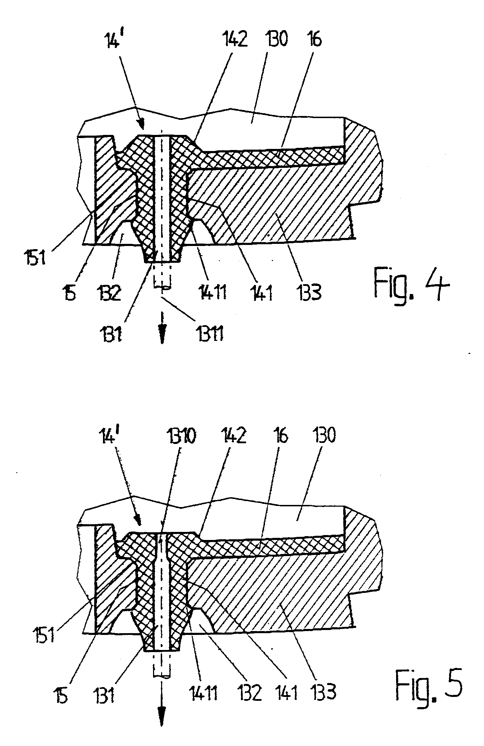

Die einzelnen Durchflußbegrenzer haben folgende Funktionsweise, wie es insbesondere aus Figur 4 und 5 der Zeichnung ersichtlich ist. Bei einem normalen oder niedrigen Fließdruck bis maximal 1 bar weist die Wasseraustrittsöffnung 131 eine durchgehende zylindrische Bohrung auf, wie es aus Figur 4 ersichtlich ist. In diesem Betriebszustand erfolgt so gut wie keine Behinderung durch den Durchflußbegrenzer.
Bei einem höheren Druck oberhalb 1 bar in der Ringkammer 130 wird der ringförmige Wulst 14' aus elastischem Material zunehmend verformt, wie es aus Figur 5 zu entnehmen ist, so daß nunmehr der Durchtrittsquerschnitt im Bereich des Wulstes 14' entsprechend der Druckzunahme verringert wird. Der Wulst 14' ist hierbei so ausgelegt, daß der Einlaßbereich der Wasseraustrittsöffnung 131 im Querschnitt entsprechend der Druckzunahme verringert wird, so daß die Durchflußmenge pro Zeiteinheit etwa konstant bleibt.

## Patentansprüche

1. Brausekopf mit einem an die Wasserzufuhr anschließbaren, wenigstens eine Wasserkammer bildenden Gehäuse und einem Bodenteil, an dem gummielastische, schlauchartige Wasserstrahldüsen (2,141) einstückig ausgebildet sind, dadurch gekennzeichnet, daß das Bodenteil aus Kunststoffverbundmaterial hergestellt ist, derart, daß die aus gummielastischem Kunststoffmaterial gebildeten Wasserstrahldüsen (2,141) an einer Trägerplatte (1,133) aus Kunststoff im Bereich von Durchtrittsöffnungen (13,15) angespritzt sind.

2. Brausekopf nach Anspruch 1, dadurch gekennzeichnet, daß die Trägerplatte (1) aus Polybutylenterephthalat (PBT) und die Wasserstrahldüsen (2) aus Silikon hergestellt sind.

3. Brausekopf nach Anspruch 1, dadurch gekennzeichnet, daß die Trägerplatte (1) aus Polypropylen (PP) und die Wasserstrahldüsen (2) aus Thermoplastelastomer (TPE) hergestellt sind.

4. Brausekopf nach einem der Ansprüche 1 bis 3, dadurch gekennzeichnet, daß das Kunststoffmaterial der Trägerplatte (1) mit Verstärkungsstoff, beispielsweise mit Glasfasern, gefüllt ist.

5. Brausekopf nach einem der Ansprüche 1 bis 4, dadurch gekennzeichnet, daß jeweils wenigstens ein Teil der Wasserstrahldüsen (2) zusammen mit einer flachen kreisring- oder kreisförmigen Scheibe (21), welche an der stromaufwärts gelegenen Stirnseite der Trägerplatte (1) angeordnet ist, aus gummielastischem Kunststoffmaterial an der Trägerplatte (1) angespritzt sind.

6. Brausekopf nach einem der Ansprüche 1 bis 5, dadurch gekennzeichnet, daß die Wasserstrahldüse (2,141) jeweils mit einem äußeren Ringbund (22,1411) versehen ist, der in einer Aussenkung (14,132) an der stromabwärts gelegenen Stirnseite der Trägerplatte (1,133) angeordnet ist.

7. Brausekopf nach Anspruch 6, dadurch gekennzeichnet, daß die Wasserstrahldüse (2) einen in der Strömungsrichtung konisch verjüngten Düsenkanal (23) hat, wobei der Außenmantel der Wasserstrahldüse (2), am Ringbund (22) beginnend, stärker als der Düsenkanal (23) verjüngt ausgebildet ist, so daß am vorstehenden Endbereich die Wasserstrahldüse (2) zur Entfernung von Verkrustungen leicht von Hand gewalkt oder abgestrichen werden kann.

8. Brausekopf nach einem der Ansprüche 1 bis 7, dadurch gekennzeichnet, daß im Bereich der einzelnen Wasseraustrittsöffnungen (131) jeweils ein Durchflußbegrenzer an der als Rohr ausgebildeten Wasserstrahldüse (141) ausgebildet ist, dessen Durchgangsquerschnitt dem der Wasseraustrittsöffnungen (131) im Normalbetrieb entspricht und bei erhöhtem Wasserdruck durch eine entsprechende Verringerung des Durchgangsquerschnitts die Wasseraustrittsmenge pro Zeiteinheit auf den Normalbetrieb begrenzt.

9. Brausekopf nach Anspruch 8, dadurch gekennzeichnet, daß als Durchflußbegrenzer stromaufwärts vor den Wasseraustrittsöffnungen (131) jeweils etwa koaxial zur Mittelachse (1311) der Wasseraustrittsöffnung (131) ein ringförmiger Wulst (14') auf dem Brauseboden (133) einstückig an dem gummielastischen Rohr (141) angeformt ist und das Rohr (141) in einer Bohrung (15) im Brauseboden (133) angeordnet ist, wobei die Elastizität des Wulstes (14') so bemessen ist, daß oberhalb einem Druck von 1 bar am Brauseboden (133) eine Einschnürung vor der Wasseraustrittsöffnung (131) erfolgt, derart, daß die Ausflußmenge pro Zeiteinheit oberhalb einem Druck von 1 bar etwa konstant bleibt.

10. Brausekopf nach Anspruch 9, dadurch gekennzeichnet, daß der Wulst (14') in einer etwa konischen Aussenkung (151) der Bohrung (15) angeordnet ist.

11. Brausekopf nach Anspruch 9 oder 10, dadurch gekennzeichnet, daß der Wulst (14') einen stromaufwärts vorstehenden, etwa kegelstumpfförmigen Ansatz (142) aufweist.

12. Brausekopf nach einem der Ansprüche 8 bis 11, dadurch gekennzeichnet, daß wenigstens der Durchflußbegrenzer aus einem gummielastischen Material, vorzugsweise Silikongummi, mit einer Härte von etwa 60 Shore hergestellt ist.

13. Verfahren zur Herstellung eines Bodenteils für den Brausekopf nach wenigstens einem der Ansprüche 1 bis 7, dadurch gekennzeichnet, daß zunächst die Trägerplatte (1,133) aus Kunststoff mit Durchtrittsöffnungen (13,15) für die Wasserstrahldüsen (2,141) hergestellt wird, so dann die Trägerplatte (1,133) in eine Spritzgießform eingelegt wird und die Wasserstrahldüsen (2,141) aus gummielastischem Kunststoffmaterial an der Trägerplatte (1,133) angespritzt werden.

14. Verfahren nach Anspruch 13, dadurch gekennzeichnet, daß beim Anspritzen der Wasserstrahldüsen (2,141) ein vorzugsweise jeweils von einem Wulst (14') gebildete Durchflußbegrenzer mit an der Trägerplatte (1,133) angespritzt wird.

## Claims

1. Shower head having a housing which is arranged to be connected to the water supply and forms at least one water chamber, and a base part on which hose-like water jet nozzles (2, 141) of rubber-like resilience are integrally formed, characterized in that the base part is manufactured from composite plastics material in such a manner that the water jet nozzles (2, 141) formed from plastics material of rubber-like resilience are injection-moulded on a carrier plate (1, 133) of plastics material in the region of through-openings (13, 15).

2. A shower head according to claim 1, characterized in that the carrier plate (1) is manufactured from polybutylene terephthalate (PBT) and the water jet nozzles (2) are manufactured from silicone.

3. A shower head according to claim 1, characterized in that the carrier plate (1) is manufactured from polypropylene (PP) and the water jet nozzles (2) are manufactured from thermoplastic elastomer (TPE).

4. A shower head according to one of claims 1 to 3, characterized in that the plastics material of the carrier plate (1) is filled with reinforcing material, for example, with glass fibres.

5. A shower head according to one of claims 1 to 4, characterized in that at least some of the water jet nozzles (2), together with a flat circular ring-shaped or circular disc (21) that is located at the upstream face of the carrier plate (1), are injection-moulded from plastics material of rubber-like resilience on the carrier plate (1).

6. A shower head according to one of claims 1 to 5, characterized in that each water jet nozzle (2, 141) is provided with an outer annular collar (22, 1411) which is arranged in a recess (14, 132) at the downstream face of the carrier plate (1, 133).

7. A shower head according to claim 6, characterized in that the water jet nozzle (2) has a nozzle channel (23) tapering conically in the flow direction, the outer envelope of the water jet nozzle (2), starting at the annular collar (22), being more markedly tapered than the nozzle channel (23), so that at its projecting end region the water jet nozzle (2) can be flexed or wiped easily by hand for removal of encrustations.

8. A shower head according to one of claims 1 to 7, characterized in that in the region of each individual water outlet opening (131) a respective flow-limiter is formed on the tube-form water jet nozzle (141), the opening area of which flow-limiter corresponds to that of the water outlet openings (131) in normal operation and at increased water pressure limits the amount of water emerging per unit of time to the amount during normal operation by means of a corresponding reduction in the opening area.

9. A shower head according to claim 8, characterized in that, as flow-limiter, upstream of the water outlet openings (131) a respective annular enlargement (14') approximately coaxial with the centre line (1311) of the water outlet opening (131) is integrally formed on the spray base (133) with each tube (141) of rubber-like resilience, and the tube (141) is arranged in a bore (15) in the spray base (133), the resilience of the enlargement (14') being so great that above a pressure of 1 bar at the spray base (133), a constriction is effected upstream of the water outlet opening (131) such that the amount of water emerging per unit of time above a pressure of 1 bar remains approximately constant.

10. A shower head according to claim 9, characterized in that the enlargement (14') is arranged in an approximately conical recess (151) of the bore (15).

11. A shower head according to claim 9 or 10, characterized in that the enlargement (14') comprises an approximately truncated cone-shaped extension (142) projecting upstream.

12. Shower head according to one of claims 8 to 11, characterized in that at least the flow-limiter is manufactured from a material of rubber-like resilience, preferably silicone rubber, having a hardness of about 60 Shore.

13. A method for the manufacture of a base part for the shower head according to at least one of claims 1 to 7, characterized in that first of all the carrier plate (1, 133) of plastics material is made with through-openings (13, 15) for the water jet nozzles (2, 141), the carrier plate (1, 133) is then placed in an injection mould and the water jet nozzles (2, 141) of plastics material of rubber-like resilience are injection-moulded on the carrier plate (1, 133).

14. A method according to claim 13, characterized in that as the water jet nozzles (2, 141) are being injection-moulded, a flow-limiter, formed preferably by an enlargement (14') in each case, is injection-moulded at the same time on the carrier plate (1, 133).

## Revendications

1. Tête de douche comportant un boîtier formant au moins une chambre à eau, reliée à une alimentation en eau et un fond dans lequel sont réalisées en une seule pièce des buses de jet d'eau (2, 141), en forme de tuyaux, ayant l'élasticité du caoutchouc, caractérisée en ce que la pièce de fond est en une matière plastique composite et les buses de jet d'eau (2, 141) sont formées en matière plastique ayant l'élasticité du caoutchouc, injecté sur une plaque de support (1, 133) en matière plastique, au niveau des orifices de passage (13, 15).

2. Tête de douche selon la revendication 1, caractérisée en ce que la plaque de support (1) est en polybutylènetérephthalate (PBT) et les buses à jet d'eau (2) sont en silicone.

3. Tête de douche selon la revendication 1, caractérisée en ce que la plaque de support (1) en polypropylène (PP) et les buses formant jets d'eau (2) sont en un élastomère thermoplastique (TPE).

4. Tête de douche selon l'une des revendications 1 à 3, caractérisée en ce que la matière plastique de la plaque de support (1) est chargée avec un matériau de renforcement par exemple des fibres de verre.

5. Tête de douche selon l'une des revendications 1 à 4, caractérisée en ce que chaque fois au moins une partie des buses formant jets d'eau (2) ainsi qu'un disque (21) plat, en forme d'anneau de cercle ou de cercle, prévu sur la face frontale de la plaque de support (1) située du côté amont, sont de la matière plastique ayant l'élasticité du caoutchouc, injectée sur la plaque de support (1).

6. Tête de douche selon l'une des revendications 1 à 5, caractérisée en ce que la buse formant jet d'eau (2, 141) est chaque fois munie d'une collerette annulaire extérieure (22, 1411), prévue dans une cavité (14, 132) de la face frontale aval de la plaque de support (1, 133).

7. Tête de douche selon la revendication 6, caractérisée en ce que la buse formant jet d'eau (2) à un canal de buse (23) qui se rétrécit suivant une forme conique dans la direction de l'écoulement, l'enveloppe extérieure de la buse formant jet d'eau (2) se réduisant plus fortement que le canal de buse (23) en commençant par la collerette annulaire (22), si bien qu'à la zone d'extrémité en saillie, la buse formant jet d'eau (2) peut être légèrement déformée ou frottée à la main pour enlever les incrustations.

8. Tête de douche selon l'une des revendications 1 à 7, caractérisée en ce qu'au niveau des différents orifices de sortie d'eau (131), on a chaque fois un limiteur de débit sur la buse à jet d'eau en forme de tube (141), dont la section de passage correspond à celle des orifices de sortie d'eau (131) en fonctionnement normal et qui, lorsque la pression de l'eau augmente, diminue par une réduction correspondante de la section de passage, la quantité d'eau qui passe par unité de temps pour rester au fonctionnement normal.

9. Tête de douche selon la revendication 8, caractérisée en ce que comme limiteur de débit, en amont, avant les orifices de sortie d'eau (131), on a chaque fois un bourrelet annulaire (14'), sensiblement coaxial à l'axe (1311) de l'orifice de sortie d'eau (131), formé en une seule pièce avec le tube (141) ayant l'élasticité du caoutchouc, sur le fond de douche (133) et le tuyau (141) est prévu dans un perçage (15) du fond de douche (133), l'élasticité du bourrelet (14') étant choisie pour qu'au-dessus d'une pression de 1 bar sur le fond (133) de la douche, il y a un rétrécissement en avant de l'orifice de sortie d'eau (131) pour que la quantité débitée par unité de temps reste sensiblement constante au-dessus d'une pression de 1 bar.

10. Tête de douche selon la revendication 9, caractérisée en ce que le bourrelet (14') se trouve dans une cavité (151) sensiblement conique du perçage (15).

11. Tête de douche selon la revendication 9 ou 10, caractérisée en ce que le bourrelet (14') a un prolongement (142) sensiblement en forme de tronc de cône, en saillie vers l'amont.

12. Tête de douche selon l'une des revendications 8 à 11, caractérisée en ce qu'au moins le limiteur de débit est en matériau ayant l'élasticité du caoutchouc de préférence du caoutchouc au silicone, ayant une dureté d'environ 60 Shore.

13. Procédé de fabrication d'une partie de fond pour une tête de douche selon au moins l'une des revendications 1 à 7, caractérisé en ce qu'on réalise tout d'abord la plaque de support (133) en matière plastique avec des orifices de passage (13, 15) pour les buses à jet d'eau (2, 141), puis on place la plaque de support (1, 133) dans un moule d'injection et on injecte les buses à jet d'eau (2, 141) en matière plastique ayant l'élasticité du caoutchouc sur la plaque de support (1, 133).

14. Procédé selon la revendication 13, caractérisé en ce que pendant l'injection des buses formant jet d'eau (2, 141), on injecte en même temps un limiteur de débit formé chaque fois de préférence par un bourrelet (14') en même temps que l'on injecte la plaque de support (1, 133).
